# EUROPEAN PATENT SPECIFICATION

(11) **EP 0 969 405 B1**
(45) Date of publication and mention of the grant of the patent: **03.03.2004**
(21) Application number: 99202909.0
(22) Date of filing: 01.08.1995
(51) Int. Cl.: G06K 11/18, A63F 13/02

(54) **Manipulator for game machine**
Handbedienteil für ein Spielgerät
Manipulateur pour une machine de jeu

(30) Priority: 02.08.1994 JP 20146594
(43) Date of publication of application: 05.01.2000
(62) Divisional of application: 95305368.3
(73) Proprietor: Nintendo Co., Limited, Kyoto-shi, Kyoto (JP)
(72) Inventor: Yokoi, Gunpei, Higashiyama-ku, Kyoto (JP); Sugino, Kenichi, Higashiyama-ku, Kyoto (JP)
(74) Representative: Jones, Colin

(56) References cited:
- EP-A- 0 470 615
- EP-A- 0 710 496
- WO-A-92/09347
- WO-A-94/12999
- FR-A- 2 613 850
- GB-A- 2 244 546
- US-A- 4 969 647
- US-A- 4 976 429

## Description

### BACKGROUND OF THE INVENTION

### Field of the invention

The present invention relates to a manipulator for game machine, and more particularly to a manipulator for game machine which is used in a television game machine, a video game machine with display, or the like to which a cartridge storing a game program is detachably attached and which executes the process for the game by reading out the game program from the cartridge.

### Description of the prior arts

Manipulators for game machine (game controllers) to be used in television game or the like known hitherto include the joy stick type as disclosed in the Japanese Laid-open patent No. 58-225,515 (corresponding to USP No. 4,414,438; hereinafter called prior art 1), and the joy pad type as disclosed in the Japanese Laid-open Utility Model No. 4-42,029 (corresponding to USP No. 5,207,426; hereinafter called prior art 2). In prior art 1, the main body housing is held by a non-dexterous hand, and a control rod (handle) is held by the dexterous hand, and by tilting the wrist in this state, the moving direction of the character is instructed. In prior art 2, on a flat housing that can be held by both hands, a plurality of operation switches for direction instruction and action instruction are arranged.

In prior art 1, in order to manipulate the control rod by tilting the wrist,the main body must be always held stably. However, for use in the game, it is necessary to manipulate action instructing switches for instructing various actions, and usually these switches are provided at the main body side, and are hence manipulated by the hand holding the main body. It is therefore difficult to hold the main body stably while manipulating the action instructing switches, and it was hard to manipulate. If the action instructing switches are provided in the control rod, since the direction is instructed by tilting the wrist, the hand is fatigued after a long use, and the controllability was poor.

In prior art 2, it is designed to be held by both hands, and the operation switches can be manipulating without changing the palm holding state, and the problems in prior art 1 were solved and stable manipulation was possible. However, since the shape is flat, it has few positions to be caught by hand or finger, and it often slips out of hands during operation, or the holding position may be deviated to cause deviation in the configuration of the switches and fingers, and misoperations are likely to occur, and it was necessary to hold the manipulator correctly on every occasion of misoperation by viewing, and correct the configuration of switches and fingers. As a result, a continuously running game was interrupted, and pleasant feel of manipulation was not obtained. In particular, when used in the game machine with a goggle type display unit, to correct the position deviation from fingers by viewing the manipulator, the game machine with display unit must be dismounted from the head, which was very bothersome.

In a controller disclosed in the Japanese Laid-open Utility Model No. 4-104,893 (hereinafter called prior art 3), since a grip is formed in the manipulator of prior art 2, it does not slip off during operation or the holding position will not be deviated. In prior art 3, however, since the manipulation plane on which operation switches are formed projects ahead (to the player side)of the grip, the player must use by warping the thumb (in other words, by keeping the thumb root always in tense state), the thumb is fatigued and cannot withstand a long use. Besides, since the root of the thumb is always in tense state, the moving range of the thumb is limited, and the feel of manipulation is not pleasant.

### SUMMARY OF THE INVENTION

Therefore, a principal object of the present invention is to provide a novel manipulator for game machine.

Another object of the present invention is to provide a manipulator having a good operability.

In accordance with one aspect of the present invention, there is provided a game controller which is adapted to be used with a video game machine and comprises a first operating portion provided in a first operating region; a second operating portion provided in a second operating region; a third operating portion provided in a third operating region; a fourth operating portion provided in a fourth operating region; a first handle formed in a manner projecting in use from a lower portion of said first operating region toward the front of a player; a second handle formed in a manner projecting in use from a lower portion of said second operating region toward the front of the player; wherein said first handle and said second handle are grippable by left and right hand palms of the player, said first operating portion and said third operating portion being arranged for operation by a left hand thumb, said second operating portion and said fourth operating portion being arranged for operation by a right hand thumb, and at least one of said first and second operating portions being arranged for designating a direction in movement of an object of a game by player's operation, characterised in that the controller further comprises a housing on which said first operating region and said second operating region are integrally provided laterally adjacent to each other in the same plane, in that said first handle and said second handle have respective front surfaces each inclined relative to an associated one of said first and second operating regions, and in that said third and fourth operating regions are respectively formed under said first and second operating regions in viewing from a plane of said housing.

In accordance with another aspect of the present invention, there is provided a game controller which is adapted to be used with a video game machine and comprises a first operating portion provided in first operating region; a second operating portion provided in a second operating region; a third operating portion provided in a third operating region; a fourth operating portion provided in a fourth operating region; a first handle formed in a manner projecting in use from a lower portion of said first operating region toward the front of a player; a second handle formed in a manner projecting in use from a lower portion of said second operating region toward the front of the player; wherein said first handle and said second handle are grippable by left and right hand palms of the player, said first operating portion and said third operating portion being arranged for operation by a left hand thumb, said second operating portion and said fourth operating portion being arranged for operation by a right hand thumb, and at least one of said first and second operating portions being arranged for designating a direction in movement of an object of a game by player's operation, characterised in that the controller further comprises a housing on which said first operating region and said second operating region are integrally provided laterally adjacent to each other in the same plane, in that a plane including respective upper surfaces of said first handle and said second handle and a plane including said first operating region and said second operating region are different from each other, and in that said third and fourth operating regions are respectively formed under said first and second operating regions in viewing from a plane of said housing.

A manipulator for game machine according to a preferred embodiment of the present invention comprises a first grip selected in a bar shape to be held by a hand of the player, a second grip selected in a bar shape to be held by the other hand of the player, a first operating region located in the thumb area of the player in the upper portion of the first grip, formed in a step so as to be lower than the thumb root position of the player of the first grip, a second operating region located in the thumb area of the player in the upper portion of the second grip, formed in a step so as to be lower than the thumb root position of the player of the second grip, first direction instructing means provided in the first operating region, second direction instructing means provided in the second operating region, and coupling means for coupling the first grip and second grip in a confronting state.

The player holds the first grip by one hand, and holds the second grip by the other hand. In the grip.... holding state, the thumb of the player draws a spontaneous arc along the step formed between the grip and the operating region,and is positioned on the first and second operating regions.

According to the present invention, the player holds in the grip catching state, and hence can hold more securely as compared with the manipulator in a flat shape held by both palms. It is further structured to be caught easily by hand and fingers, and dropping of the manipulator during use or deviation of holding position are avoided, thereby allowing to continue to manipulate stably without having to look at the hands or change the holding position correctly, and misoperation due to deviation of configuration of switches and fingers can be prevented.

Moreover, between the grip and operating region, a step is formed so as to be lower than the thumb root position of the player in the grip, so that the thumb draws a spontaneous arc along the step. As a result, any excessive load is not applied to the thumb, and the fatigue is less if used for a long time.

Furthermore, according to a fourth aspect of the invention, the front, rear, left and right directions, and upper, lower, right slant and left slant directions can be instructed, so that directions can be instructed in a three-dimensional space.

The above described objects and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front perspective view of a manipulator for game machine in an embodiment of the invention;
Fig. 2 is a rear perspective view of the embodiment in Fig. 1;
Fig. 3 is a concept diagram showing four moving directions, front, rear, left and right;
Fig. 4 is a concept diagram showing four moving directions, up, down, right slant and left slant;
Fig. 5 is a perspective view showing an operation state as seen from the front side in Fig. 1;
Fig. 6 is a perspective view showing an operation state as seen from the rear side in Fig. 1;
Fig. 7 is a diagram showing an operation state as seen from side in Fig. 1;
Fig. 8 is a front perspective view of a manipulator for game machine in other embodiment of the invention;
Fig. 9 is a rear perspective view of the embodiment in Fig. 8; and
Fig. 10 is a side view of the embodiment in Fig. 8.

### DETAILED DESCRIPTION OF THE PREFERRED EMBODIMENTS

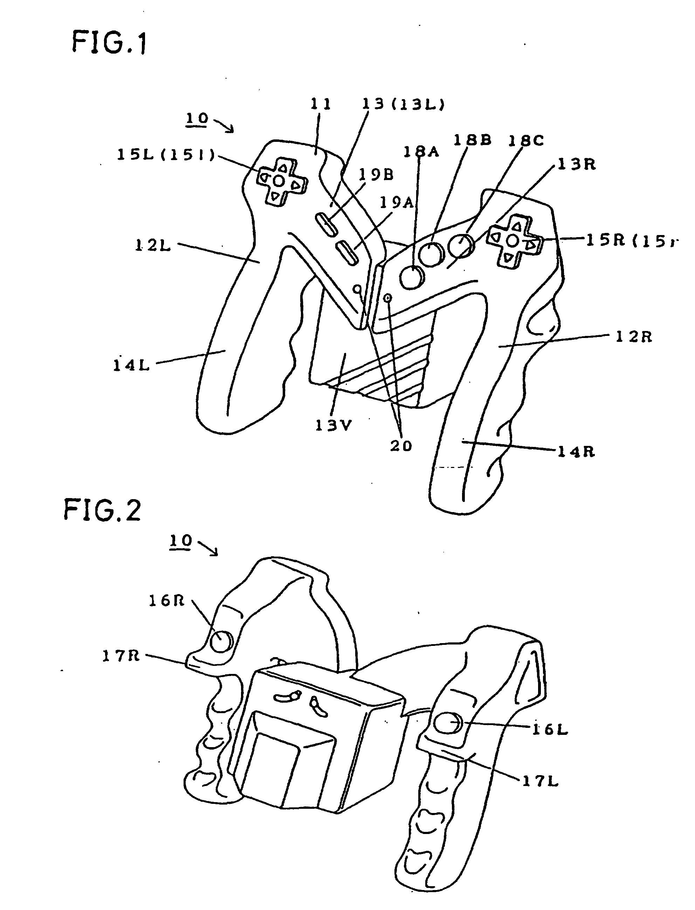

Fig.1 and Fig. 2 are perspective views showing a manipulator for game machine in an embodiment of the invention, and specifically Fig. 1 is a perspective view from the front side, and Fig. 2 is a perspective view from the rear side.

In the diagrams, a manipulator for game machine (hereinafter called controller) 10 contains a housing 11. The housing 11 is roughly composed of a right handle 12R, a left handle 12L, and a coupling 13 for coupling them. Inside the housing 11 is accommodated a board in a proper shape (not shown) in which desired conductive circuit patterns are formed by printed wiring or the like.

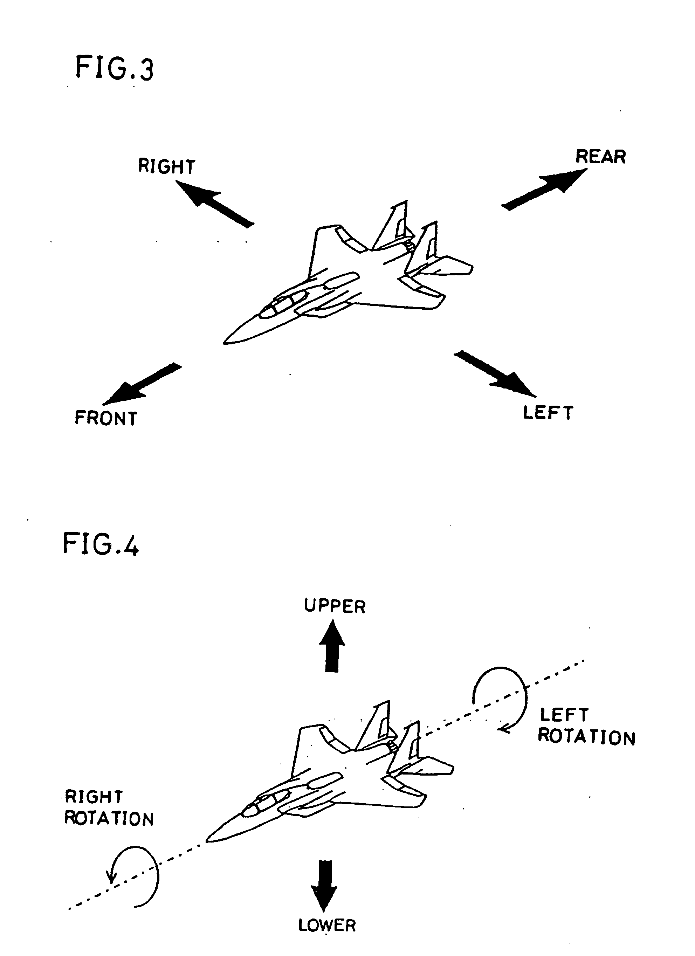

The right handle 12R and left handle 12L respectively comprise grips 14R, 14L to be held by the middle, ring and little fingers of the player, and a direction instructing switch for right hand 15R and a direction instructing switch for left hand 15L for instructing the moving direction of characters (hero and others) of the game, being disposed in the thumb position area of the player in the upper portions of the grips 14R, 14L. The direction instructing switch for right hand 15R comprises, for example, a cross key top 15r capable of instructing four orthogonal directions, that is, front, rear, left and right directions shown in Fig. 3, and further comprises four pressing pads corresponding to the four directions. The direction instructing switch for left hand 15L comprises, for example, a cross key top 151 capable of instructing four directions, that is, upper, lower, right slant and left slant directions shown in Fig. 4, and further comprises four pressing pads corresponding to the four directions.

The grips 14R, 14L have concave and convex parts to be matched with the fingers of the player when held, and a pleasant feel of holding is realized. In the index finger position areas of the player in the upper portions of the rear side of the grips 14R, 14L (in other words, the rear sides of the locations of the direction instructing means for right hand 15R and direction instructing means for left hand 15L), action instructing switches 16R, 16L (see Fig. 2) are formed. These action instruction switches 16R, 16L differ with the game program, and are used for instructing actions of characters such as "run" and "jump" except for the moving direction. In the boundary areas of the action instructing switches 16R, 16L and grips 14R, 14L, protrusions 17R, 17L are formed, on which the index fingers can be placed when not manipulating the action instructing switches 16R, 16L, and they also function as the guides for defining the moving direction of the index fingers at the time of manipulation.

The coupling 13 further comprises a power source unit 13V, a right coupling 13R for coupling the power source unit 13V and right handle 12R, and a left coupling 13L for coupling the power source unit 13V and left handle 12L. A dry cell or a battery is placed in the power source unit 13V, and when a dry cell is used, a battery lid is formed at proper position. When a rechargeable battery is used, an external input terminal for connecting with a commercial AC power source detachably or firmly with a cord or the like is exposed at a position not disturbing the manipulation of the player (for example, in the bottom of the power source unit 13V), and is covered with a lid or the like if necessary. It may be also constituted so that both dry cell and battery can be used.

The AC adapter for converting the commercial AC power source into DC may be either provided externally by using a cord, or incorporated in the power source unit 13V. When it is constituted to supply current through a cord by externally attaching an AC adapter, the overall weight of the controller 10 can be reduced, and hence the fatigue of the arms in long use can be alleviated. Or, when using by putting on a table or the like or the weight may be ignored, the overall weight of the controller 10 may be increased by incorporating the AC adapter, and hence the center of gravity is stabilized to prevent shaking during manipulation, so that a stable feel of manipulation may be realized.

In the right coupling 13R, switches 18A, 18B, 18C are formed so as to instruct three actions, different from those of the action instructing switches 16R, 16L, such as "punch," "kick" and "throw." In the left coupling 13L, a start switch 19A for instructing to start the game, and a select switch 19B for selecting the games are formed.

In this embodiment, in order that the switches 18A, 18B, 18C, 19A, and 19B may be arranged within the accessible range of the thumbs, the coupling 13 is coupled near the upper end of the handle 12 in which the direction instructing switch 15 is formed, but as far as the switches 18A, 18B, 18C, 19A, and 19B may be arranged within the accessible range of the thumbs, it is not always necessary to coupling the coupling 13 near the upper end of the handle 12. Otherwise, when the operating region for forming the direction instructing switch 15 is wide and the switches 18A, 18B, 18C, 19A, and 19B are arranged in this area, the coupling position of the coupling 13 with the handle 12 is not particularly limited.

The direction instructing switch for right hand 15R and direction instructing switch for left hand 15L comprise cross key tops 15r, 151 as mentioned above. The direction instructing switches including these key tops 15r, 151 are disclosed, for example, in the Japanese Utility Model Publication No. 3-13,951 (USP No. 4,687,200). That is, in the lower parts of the key tops 15r, 151, rubber contacts (not shown) forming four contacts are respectively arranged, and each rubber contact is composed on a board (not shown) in which contact circuits are formed. By pressing any one of a total of eight pressing pads of the key tops 15r and 15l, the four contacts each or eight contacts in all and the contact circuits are electrically connected, and a signal instructing any one or combined direction of eight directions of front, rear, left, right, upper, lower, right slant and left slant directions is picked up, thereby acting as a switch for instructing a three-dimensional direction. The key tops 15r, 151 are put in the housing 11 with the pressing pads exposed, and the board is placed near the bottom of the key tops 15r, 151 in the housing 11.

Incidentally, if the character manipulated by the controller 10 of the invention is an airplane as shown in Figs. 3 and 4, its three-dimensional move instructing direction consists of eight directions as mentioned above, but depending on the character in question, the three-dimensional move instructing direction is composed of different combinations, and the combinations are controlled by the game program. As the three-dimensional move instructing directions aside from those mentioned above may include, for example in a human character, eight directions, front, rear, left, right, jump, squat, face right, and face left.

The switches 16R, 16L, 18A, 18B, 18C, 19A, 19B are respectively composed of key tops 16r, 16l, 18a, 18b, 18c, 19a, 19b stored with their pressing pads exposed from the housing 11, rubber contacts (not shown) disposed in the lower part of each key top, and a board (not shown) on which rubber contacts are placed and contact circuits are formed.

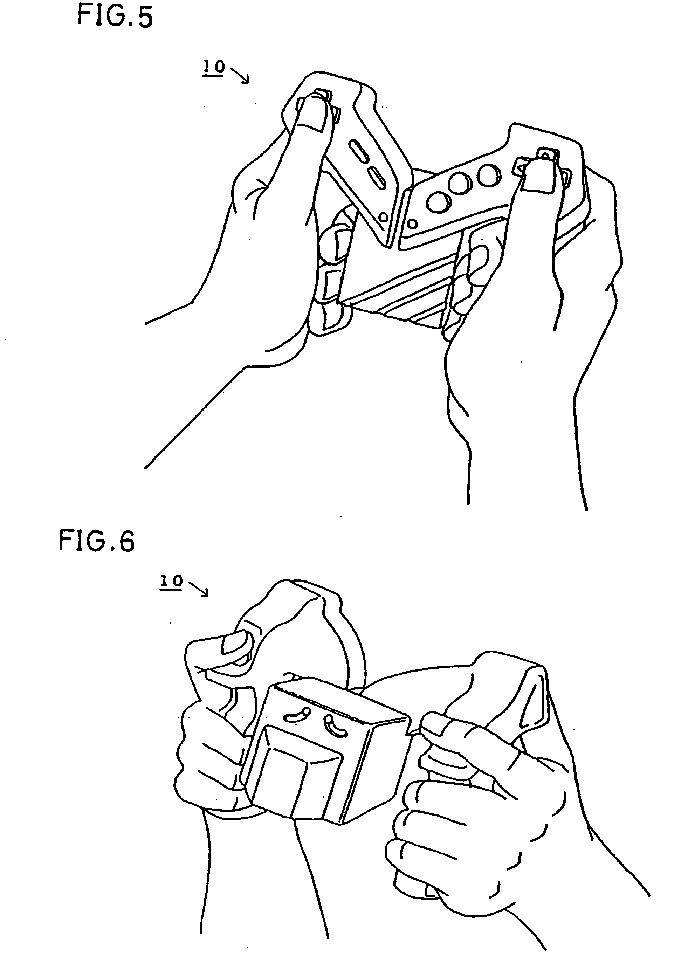

Fig. 5 and Fig. 6 are diagrams showing the operation state of the controller 10 of the invention. The player holds the right grip 14R and left grip 14L by the right hand and left hand, respectively. At this time, the middle, ring and little fingers of the player are curved along the per-formed convex and concave parts, so that the player can hold the controller 10 firmly. The index fingers are positioned above the protrusions 17R, 17L formed in the upper parts of the grips 14R, 14L, and are used for manipulating the action instructing switches 16R, 16L. Usually, the index fingers rest on the protrusions 17R, 17L, and when manipulating the action instructing switches 16R, 16L, they are moved along the protrusions 17R, 17L. The thumbs are located on the key tops 15r, 151 while gripping the grips 14R, 14L, and presses down the pressing parts by tilting in the desired input direction. As a result, the corresponding contact is connected, and a desired direction instructing signal (pulse signal) is picked up. Besides, by slightly shifting the right thumb to the inside, the action instructing switches 18A, 18B, 18C can be pressed.

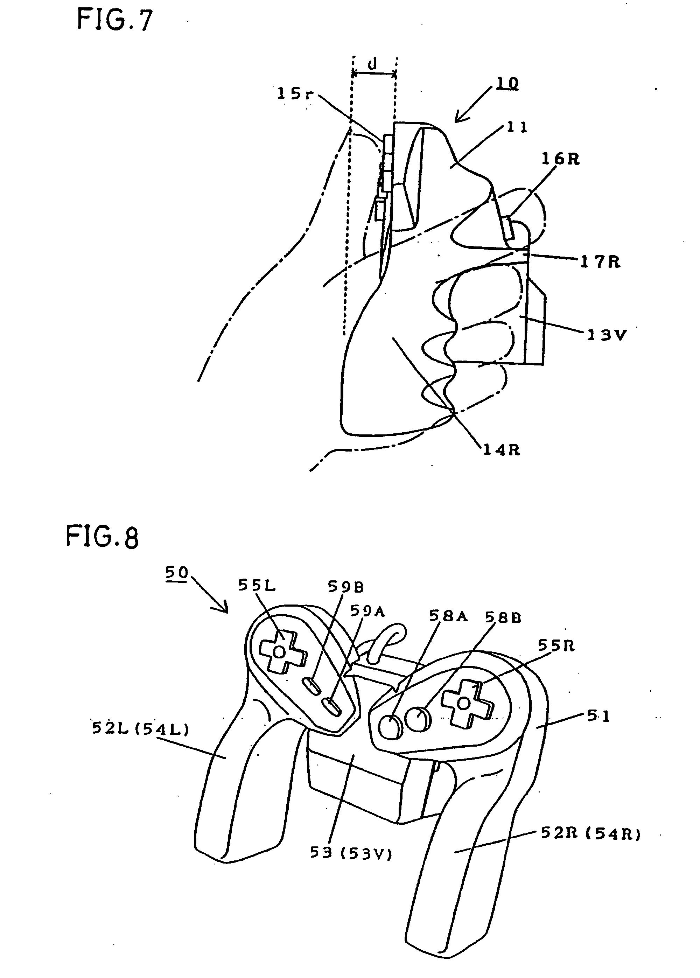

Meanwhile, as shown in Fig. 7, in the controller 10 of the invention, since a step d is provided between the grip 14 and the operating region forming the direction instructing switch 15, when the player holds the controller 10, the thumb draws a spontaneous arc along the step d. Accordingly, the thumb is free to move, without being warped, loaded with an excessive force, or kept always in tense state, so that fatigue is less if used for a long time.

More preferably, the interval or opening of the grips 14R, 14L may be freely adjustable depending on the individual difference of the player, by providing a shaft 20 penetrating from the surface of the right coupling 13R and left coupling 13L to the back of the power source unit 13V. Or, relating to the right coupling 13R and left coupling 13L, a gear may be provided to engage with each other, and the right and left sides may be opened or closed simultaneously, or the opening angle may be adjustable in multiple steps.

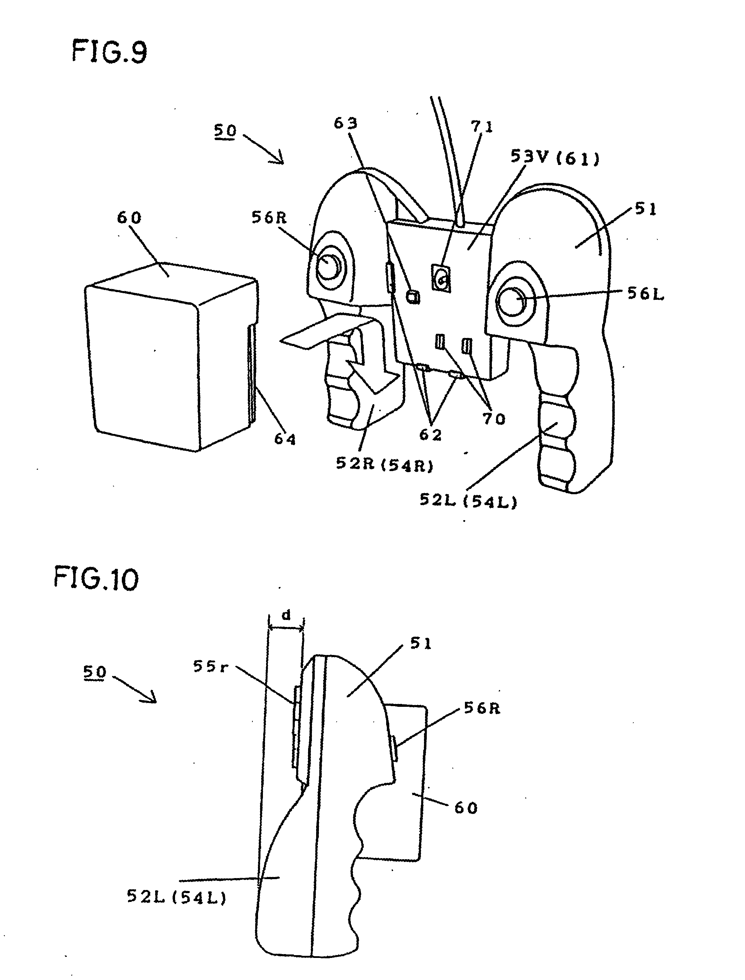

Fig. 8 and Fig. 9 are diagrams showing a manipulator for game machine in other embodiment of the invention, and specifically Fig. 8 is a perspective view seen from the surface, and Fig. 9 is a perspective view seen from the back side.

A controller 50 in the embodiment in Fig. 8 comprises a housing 51, same as the controller 10 in the embodiment in Fig. 1. The housing 51 is roughly composed of a right handle 52R, a left handle 52L, and a coupling 53 for coupling them. Inside the housing 51 is accommodated a board in a proper shape (not shown) in which desired conductive circuit patterns are formed by printed wiring or the like.

The right handle 52R and left handle 52L respectively comprise grips 54R, 54L, direction instructing switch for right hand 55R, and direction instructing switch for left hand 55L, and the direction instructing switches 55R and 55L further comprise cross key tops 55r, 551.

The grips 54R, 54L have convex and concave parts to match with the fingers of the player, and action instructing switches 56R, 56L are formed in the index finger position areas of the player in the upper parts of the back side of the grips 54R, 54L. In the embodiment in Fig. 1, the index fingers are positioned by forming protrusions 17R, 17L in the boundary parts of the grips 14R, 14L and action instructing switches 16R, 16L, but in the embodiment in Fig. 8, the forming regions of the action instructing switches 56R, 56L are inclined by a certain angle to the grips 54R, 54L and direction instructing switches 55R, 55L, thereby defining the index fingers so as not to deviate in the direction toward the grips 54R, 54L, and the index fingers are further positioned by forming a recess around the action instructing switches 56R, 56L.

The coupling 53 comprises a power source unit 53V, a right coupling 53R, and a left coupling 53L. In the embodiment in Fig. 8, by widening the operating regions for forming the direction instructing switches 55R, 55L, they serve also as the right coupling 53R and left coupling 53L. The power source unit 53V comprises a power source case 60 detachable from the housing 51, and a base 61 of the housing 51 side for detaching or attaching the power source case 60. In the power source case 60, a dry cell or a rechargeable battery is placed. In the base 61, an engaging pawl 62 and an engaging bump 63 are formed for engaging and holding the power source case 60. By contrast, at the power source case 60 side, an engaging groove 64 corresponding to the engaging pawl 62, and an engaging recess (not shown) to be engaged with the engaging bump 63 are formed.

A terminal 70 for electrically connecting with the power source case 60 is formed in the base 61, and also a terminal 71 for connecting the power cord when not attaching and using the power source case 60 is formed, so that the player may attach and use the power source case 60, or use the power cord by detaching it, as desired. When the power source case 60 is attached, the terminal 71 for power source cord is covered with the power source case 60 so as not to be exposed outside.

In the right coupling 53R, action instructing switches 58A, 58B for instructing actions different from the action instructing switches 56R, 56L are formed, and the left coupling 53L forms a start switch 59A and a select switch 59B. The direction instructing switches 55R, 55L, the action instructing switches 56R, 56L, 58A, 58B, start switch 59A and select switch 59B are composed of, same as in the embodiment in Fig. 1, key tops 53r, 531, 56r, 561, 58a, 58b, 59a, 59b, rubber contacts (not shown) formed in the lower part of each key top, and the board (not shown) on which rubber contacts are placed and contact circuits are formed.

Moreover, as shown in Fig. 10, also in the embodiment in Fig. 8, a step d is formed between the grip 54 and the operating region for forming the direction instructing switch 55. Accordingly, when the player holds the controller 50, the thumb draws a spontaneous arc along the step d, and is free to move without being warped, applied with an excessive load, or kept always in a tense state, so that the fatigue is less if used for a long time.

In the foregoing embodiments of the invention, the move direction instructions in a three-dimensional game are mentioned, but in a game enough with two-dimensional direction instructions only not requiring three-dimensional direction instructions, the moving direction of the object character may be instructed in one cross key, and the direction of the elements accompanying the character may be instructed in the other cross key. For example, in a game using soldiers as characters, the soldier moving direction is instructed by one cross key, and the firearm direction may be instructed by the other cross key. Furthermore, in an object driven independently in the right and left driving wheels such as war tank, the left drive wheel may be manipulated by the direction instructing switch for left hand 15L (55L), and the right drive wheel may be manipulated by the direction instructing switch for right hand 15R (55R).

Although the present invention has been described and illustrated in detail, it is clearly understood that the same is by way of illustration and example only and is not to be taken by way of limitation, the scope of the present invention being limited only by the terms of the appended claims.

## Claims

1. A game controller (10, 50) which is adapted to be used with a video game machine and comprises a first operating portion (15L, 55L) provided in a first operating region; a second operating portion (15R, 55R) provided in a second operating region; a third operating portion (19A, 19B, 59A, 59B) provided in a third operating region; a fourth operating portion (18A, 18B, 58A, 58B) provided in a fourth operating region; a first handle (14L, 54L) formed in a manner projecting in use from a lower portion of said first operating region toward the front of a player; a second handle (14R, 54R) formed in a manner projecting in use from a lower portion of said second operating region toward the front of the player; wherein said first handle and said second handle are grippable by left and right hand palms of the player, said first operating portion and said third operating portion being arranged for operation by a left hand thumb, said second operating portion and said fourth operating portion being arranged for operation by a right hand thumb, and at least one of said first and second operating portions being arranged for designating a direction in movement of an object of a game by player's operation, **characterised in that** the controller further comprises a housing (11, 51) on which said first operating region and said second operating region are integrally provided laterally adjacent to each other in the same plane, **in that** said first handle and said second handle have respective front surfaces each inclined relative to an associated one of said first and second operating regions, and **in that** said third and fourth operating regions are respectively formed under said first and second operating regions in viewing from a plane of said housing.

2. A game controller according to claim 1 **characterised in that** said first operating region and said second operating region are formed to be lowered in relation to portions at which the thumb roots are positioned on said first handle and said second handle.

3. A game controller (10, 50) which is adapted to be used with a video game machine and comprises a first operating portion (15L, 55L) provided in first operating region; a second operating portion (15R, 55R) provided in a second operating region; a third operating portion (19A, 19B, 59A, 59B) provided in a third operating region; a fourth operating portion (18A, 18B, 58A, 58B) provided in a fourth operating region; a first handle (14L, 54L) formed in a manner projecting in use from a lower portion of said first operating region toward the front of a player; a second handle (14R, 54R) formed in a manner projecting in use from a lower portion of said second operating region toward the front of the player; wherein said first handle and said second handle are grippable by left and right hand palms of the player, said first operating portion and said third operating portion being arranged for operation by a left hand thumb, said second operating portion and said fourth operating portion being arranged for operation by a right hand thumb, and at least one of said first and second operating portions being arranged for designating a direction in movement of an object of a game by player's operation, **characterised in that** the controller further comprises a housing (11, 51) on which said first operating region and said second operating region are integrally provided laterally adjacent to each other in the same plane, **in that** a plane including respective upper surfaces of said first handle and said second handle and a plane including said first operating region and said second operating region are different from each other, and **in that** said third and fourth operating regions are respectively formed under said first and second operating regions in viewing from a plane of said housing.

## Patentansprüche

1. Spiel-Steuerung (10, 50), die eingerichtet ist, mit einem Video-Spielgerät verwendet zu werden, und aufweist ein erstes Bedienteil (15L, 55L), vorgesehen in einem ersten Bedienbereich; ein zweites Bedienteil (15R, 55R), vorgesehen in einem zweiten Bedienbereich; ein drittes Bedienteil (19A, 19B, 59A, 59B), vorgesehen in einem dritten Bedienbereich; ein viertes Bedienteil (18A, 18B, 58A, 58B), vorgesehen in einem vierten Bedienbereich; einen ersten Griff (14L, 54L), ausgebildet in einer Weise, dass er bei Gebrauch von einem unteren Teil des ersten Bedienbereichs in Richtung der Spielervorderseite hervorsteht; einen zweiten Griff (14R, 54R), ausgebildet in einer Weise, dass er bei Gebrauch von einem unteren Teil des zweiten Bedienbereichs in Richtung der Spielervorderseite hervorsteht; wobei der erste Griff und der zweite Griff mittels der linken und der rechten Handfläche des Spielers greifbar sind, wobei das erste Bedienteil und das dritte Bedienteil zum Betätigen mittels eines Daumens der linken Hand angeordnet sind, wobei das zweite Bedienteil und das vierte Bedienteil zur Betätigung mittels eines Daumens der rechten Hand angeordnet sind, und wobei zumindest eines des ersten und des zweiten Bedienteils zum Bestimmen einer Bewegungsrichtung eines Spiel-Objekts infolge der Spieleraktion eingerichtet ist, **dadurch gekennzeichnet, dass** die Spiel-Steuerung ferner ein Gehäuse (11, 51) aufweist, an dem der erste Bedienbereich und der zweite Bedienbereich einstückig seitlich aneinander angrenzend in derselben Ebene vorgesehen sind, dass der erste Griff und der zweite Griff jeweilige Vorderflächen aufweisen, die jeweils relativ zu einem zugeordneten des ersten und des zweiten Bedienbereichs geneigt sind, und dass der dritte und der vierte Bedienbereich jeweils unterhalb des ersten und des zweiten Bedienbereichs von einer Ebene des Gehäuses aus gesehen ausgebildet sind.

2. Spiel-Steuerung gemäß Anspruch 1, **dadurch gekennzeichnet, dass** der erste Bedienbereich und der zweite Bedienbereich derart ausgebildet sind, dass sie in Bezug auf Abschnitte tiefer liegen, an denen die Daumenwurzeln am ersten Griff und am zweiten Griff positioniert sind.

3. Spiel-Steuerung (10, 50), die eingerichtet ist, mit einem Video-Spielgerät verwendet zu werden, und aufweist ein erstes Bedienteil (15L, 55L), vorgesehen in einem ersten Bedienbereich; ein zweites Bedienteil (15R, 55R), vorgesehen in einem zweiten Bedienbereich; ein drittes Bedienteil (19A, 19B, 59A, 59B), vorgesehen in einem dritten Bedienbereich; ein viertes Bedienteil (18A, 18B, 58A, 58B), vorgesehen in einem vierten Bedienbereich; einen ersten Griff (14L, 54L), ausgebildet in einer Weise, dass er bei Gebrauch von einem unteren Teil des ersten Bedienbereichs in Richtung der Spielervorderseite hervorsteht; einen zweiten Griff (14R, 54R), ausgebildet in einer Weise, dass er bei Gebrauch von einem unteren Teil des zweiten Bedienbereichs in Richtung der Spielervorderseite hervorsteht; wobei der erste Griff und der zweite Griff mittels der linken und der rechten Handfläche des Spielers greifbar sind, wobei das erste Bedienteil und das dritte Bedienteil zum Betätigen mittels eines Daumens der linken Hand angeordnet sind, wobei das zweite Bedienteil und das vierte Bedienteil zur Betätigung mittels eines Daumens der rechten Hand angeordnet sind, und wobei zumindest eines des ersten und des zweiten Bedienteils zum Bestimmen einer Bewegungsrichtung eines Spiel-Objekts infolge der Spieleraktion eingerichtet ist, **dadurch gekennzeichnet, dass** die Spiel-Steuerung ferner ein Gehäuse (11, 51) aufweist, an dem der erste Bedienbereich und der zweite Bedienbereich einstückig seitlich aneinander angrenzend in derselben Ebene vorgesehen sind, dass sich eine Fläche, aufweisend jeweilige obere Flächen des ersten Griffs und des zweiten Griffs, und eine Fläche, aufweisend den ersten Bedienbereich und den zweiten Bedienbereich, voneinander unterscheiden, und dass der dritte und der vierte Bedienbereich jeweils unter dem ersten und dem zweiten Bedienbereich aus der Sicht von einer Fläche des Gehäuses aus ausgebildet.

## Revendications

1. Organe de commande (10, 50) de jeux qui est destiné à être utilisé avec une machine de jeux vidéo et qui comporte une première partie de manoeuvre (15L, 55L) placée dans une première région de manoeuvre, une seconde partie de manoeuvre (15R, 55R) disposée dans une seconde région de manoeuvre, une troisième partie de manoeuvre (19A, 19B, 59A, 59B) disposée dans une troisième région de manoeuvre, une quatrième partie de manoeuvre (18A, 18B, 58A, 58B) disposée dans une quatrième région de manoeuvre, une première poignée (14L, 54L) formée afin que, pendant l'utilisation, elle dépasse d'une partie inférieure de la première région de manoeuvre vers l'avant d'un joueur, une seconde poignée (14R, 54R) formée de manière que, pendant l'utilisation, elle dépasse d'une partie inférieure de la seconde région de manoeuvre vers l'avant du joueur, dans lequel la première poignée et la seconde poignée peuvent être saisies par les paumes des mains gauche et droite du joueur, la première partie de manoeuvre et la troisième partie de manoeuvre étant disposées afin qu'elles soient manoeuvrées par le pouce de la main gauche, la seconde partie de manoeuvre et la quatrième partie de manoeuvre étant disposées afin qu'elles soient manoeuvrées par le pouce de la main droite, et l'une au moins des première et seconde parties de manoeuvre étant disposée afin qu'elle désigne une direction de déplacement d'un objet d'un Jeu par manoeuvre par le Joueur, **caractérisé en ce que** l'organe de commande comporte en outre un boîtier (11, 51) sur lequel la première région de manoeuvre et la seconde région de manoeuvre sont disposées solidairement et latéralement l'une près de l'autre dans le même plan, **en ce que** la première poignée et la seconde poignée ont des faces avant respectives inclinées chacune par rapport à une région associée parmi les première et seconde régions de manoeuvre, et **en ce que** les troisième et quatrième régions de manoeuvre sont formées respectivement sous les première et seconde régions de manoeuvre, lorsqu'elles sont vues depuis un plan du boîtier.

2. Organe de commande de jeux selon la revendication 1, **caractérisé en ce que** la première région de manoeuvre et la seconde région de manoeuvre sont formées afin qu'elles soient abaissées par rapport à des parties auxquelles les bases des pouces sont disposées sur la première poignée et la seconde poignée.

3. Organe de commande (10, 50) de jeux qui est destiné à être utilisé avec une machine de jeux vidéo et qui comporte une première partie de manoeuvre (15L, 55L) placée dans une première région de manoeuvre, une seconde partie de manoeuvre (15R, 55R) disposée dans une seconde région de manoeuvre, une troisième partie de manoeuvre (19A, 19B, 59A, 59B) disposée dans une troisième région de manoeuvre, une quatrième partie de manoeuvre (18A, 18B, 58A, 58B) disposée dans une quatrième région de manoeuvre, une première poignée (14L, 54L) formée afin que, pendant l'utilisation, elle dépasse d'une partie inférieure de la première région de Manoeuvre vers l'avant d'un joueur, une seconde poignée (14R, 54R) formée de manière que, pendant l'utilisation, elle dépasse d'une partie inférieure de la seconde région de manoeuvre vers l'avant du joueur, dans lequel la première poignée et la seconde poignée peuvent être saisies par les paumes des mains gauche et droite du joueur, la première partie de manoeuvre et la troisième partie de manoeuvre étant disposées afin qu'elles soient manoeuvrées par la pouce de la main gauche, la seconde partie de manoeuvre et la quatrième partie de manoeuvre étant disposées afin qu'elles soient manoeuvrées par le pouce de la main droite, et l'une au moins des première et seconde parties de manoeuvre étant disposée afin qu'elle désigne une direction de déplacement d'un objet d'un jeu par manoeuvre par le joueur, **caractérisé en ce qu'**il comporte en outre un boîtier (11, 51) sur lequel la première et la seconde région de manoeuvre sont disposées solidairement latéralement l'une près de l'autre dans le même plan, **en ce qu'**un plan comprenant les surfaces supérieures respectives de la première poignée et de la seconde poignée et un plan comprenant la première région de manoeuvre et la seconde région de manoeuvre diffèrent l'un de l'autre, et **en ce que** les troisième et quatrième régions de manoeuvre sont formées respectivement sous les première et seconde régions de manoeuvre en vue depuis un plan du boîtier.
